**Europäisches Patentamt**

**European Patent Office**

**Office européen des brevets**

(19)

(11) Veröffentlichungsnummer: **0 094 570**
**B1**

(12) # EUROPÄISCHE PATENTSCHRIFT

(45) Veröffentlichungstag der Patentschrift:
23.07.86

(51) Int. Cl.⁴: **G 01 M 17/00**

(21) Anmeldenummer: **83104453.2**

(22) Anmeldetag: **05.05.83**

(54) Anordnung zur Simulation der Betriebsbeanspruchungen von Fahrzeugen bzw. Fahrzeugbaugruppen.

(30) Priorität: **13.05.82 DE 3218019**

(43) Veröffentlichungstag der Anmeldung:
**23.11.83 Patentblatt 83/47**

(45) Bekanntmachung des Hinweises auf die Patenterteilung:
**23.07.86 Patentblatt 86/30**

(84) Benannte Vertragsstaaten:
**AT BE CH DE FR GB IT LI LU NL SE**

(56) Entgegenhaltungen:
**CH-A-470 660**
**DE-C-2 445 406**

(73) Patentinhaber: **Fraunhofer- Gesellschaft zur Förderung der angewandten Forschung e.V., Leonrodstrasse 54, D-8000 München 19 (DE)**

(72) Erfinder: **Pantucek, Peter, Dr.- Ing., Dieburger Strasse 10/12, D-6100 Darmstadt (DE)**
Erfinder: **Grubisic, Vatroslav, Dr.- Ing., Zum Stetteritz 1, D-6107 Reinheim 4 (DE)**

(74) Vertreter: **Kraus, Walter, Dr., Patentanwälte Kraus, Weisert & Partner Thomas- Wimmer-Ring 15, D-8000 München 22 (DE)**

## Beschreibung

Die Erfindung betrifft eine Anordnung zur Simulation der Betriebsbeanspruchungen von Fahrzeugen bzw. Fahrzeugbaugruppen mittels gleichzeitig wirksamer, über beweglich gekoppelte Glieder eingeleiteter und übertragener, unterschiedlich gerichteter Prüfkräfte, insbesondere zur Schwingfestigkeitsprüfung von Radachsen und -aufhängungen mit servohydraulischer Krafterzeugung.

Bei bekannten Anordnungen dieser Art sind die zur Einleitung und Übertragung der in der Regel mittels servohydraulischer Prüfzylinder erzeugten Prüfkräfte dienenden Glieder durch Gelenke, wie Kardangelenke, Watt-Gelenke, Winkelhebel und dergl., miteinander gekoppelt. Die an solchen Gelenken auftretenden, in der Regel nicht zu vernachlässigenden dynamischen Massenkräfte können zusammenwirkend mit dem Lagerspiel und der Lagerreibung das Verhalten der mit dem zu prüfenden Objekt zusammen ein schwingfähiges System bildenden Prüfanordnung in ungünstiger Weise beeinflussen. Ferner wirkt sich der Verschleiß nachteilig aus, dem diese sehr stark beanspruchten Gelenke unterliegen und der dazu führt, daß sich die Prüfergebnisse bald nicht mehr als konstant und voll reproduzierbar erweisen.

Die vorgenannten ungünstigen Eigenschaften treten in besonderem Maße in Erscheinung, wenn das zu prüfende Objekt selbst Gelenke aufweist, die bewirken, daß der Angriffspunkt der gleichzeitig eingeleiteten Prüfkräfte sich nicht in einer Ebene bewegt, sondern eine sphärische Kurve beschreibt. So wirkt sich bei einer servohydraulischen Prüfanordnung, mit der die Schwingfestigkeit der Radachsen bzw. -aufhängungen von Kraftfahrzeugen getestet werden soll, bei denen die Radführung durch Querlenker erfolgt, die Schwingung der Radachse um die zu dieser im wesentlichen senkrechte Lagerachse des Querlenkers besonders nachteilig auf das dynamische Verhalten des gesamten Systems und insbesondere auf die Arbeitsweise der Prüfanordnung aus.

Der Erfindung liegt daher die Aufgabe zugrunde, bei einer Anordnung gemäß dem Gattungsbegriff des Patentspruchs 1 die üblichen Gelenke zur Koppelung der kraftübertragenden Glieder durch Koppelmittel zu ersetzen, die gestatten, sowohl die störenden dynamischen Massenkräfte zu reduzieren als auch das Lagerspiel, die Lagerreibung und den durch die Beanspruchung der Kopplungen bedingten Verschleiß zu beseitigen.

Diese Aufgabe wird erfindungsgemäß dadurch gelöst, daß die Glieder durch Biegefedern beweglich miteinander gekoppelt sind, über die die Prüfkräfte eingeleitet und übertragen werden und die so orientiert sind, daß sie in der Richtung der zu übertragenden Kräfte zug- und druckfeste Kopplungen bilden.

Es ist bekannt, mit Hilfe von Biegefedern Kopplungen in der Form sogenannter Federgelenke zu bewerkstelligen. Diese Federgelenke haben in der Regel den Charakter sphärischer Gelenke, weil an ihnen drei aufeinander senkrecht stehende Biegerichtungen unterscheidbar sind; insbesondere sind sie nachgiebig auf Zug und Druck. Die bekannten Federgelenke sind daher mit den zug- und druckfesten Kopplungen gemäß der Erfindung nicht vergleichbar.

Als Biegefedern für eine Kopplung gemäß der Erfindung kommen vorzugsweise Biegestäbe und Blattfedern in Betracht. Biegestäbe haben den Vorzug, daß sie in allen zur Richtung der zu übertragenden Kraft senkrechten Richtungen federn bzw. Stöße abfangen können. Ein gleichartiges Verhalten läßt sich bei Kopplungen aus Blattfedern dadurch erzielen, daß Blattfedern mit zueinander senkrechten Biegerichtungen hintereinander geschaltet werden. Bei allen Kopplungen können bedarfsweise anstelle nur einer Biegefeder mehrere, parallel geschaltete Biegefedern vorgesehen werden.

Bei Anordnungen zur Schwingfestigkeitsprüfung von Radachsen und -aufhängungen mit servohydraulischer Krafterzeugung ist eine möglichst niedrige Bauhöhe erwünscht, die eine den Werten einer Krafteinleitung über den Reifen entsprechenden Simulation der Betriebsbeanspruchungen gestattet. Dieses Ziel wird gemäß einer Weiterbildung der Erfindung bei einer Anordnung zur Übertragung mittels servohydraulischen Prüfzylindern simulierten Prüfkräften bei der Schwingfestigkeitsprüfung von Radachsen und -aufhängungen durch Simulation von Längs-, Seiten- und Vertikalkraft erreicht durch eine Brücke mit zwei zur Richtung der Vertikalkraft parallelen, von der Radachse wegweisenden Pfeilern, mittels der die von einem Prüfzylinder simulierte Vertikalkraft in zwei parallele Prüfkräfte aufgeteilt wird, durch zwei zur Richtung der Vertikalkraft parallele, zur Radachse weisende Stangen, auf die die Prüfkräfte vom Fuße der Brückenpfeiler durch Kopplungen aus Blattfedern mit zueinander senkrechten Biegerichtungen, vorzugsweise Biegerichtungen in Richtung der Längskraft einerseits und der Seitenkraft andererseits, übertragen werden, und durch ein mit der Radachse verbundenes, das Fahrzeugrad simulierendes, senkrecht zu den beiden Stangen orientiertes und mit diesen durch Blattfedern gekoppeltes Joch, durch welches die von den beiden Stangen übertragenen Prüfkräfte zur auf die Radachse einwirkenden Vertikalkraft vereint werden.

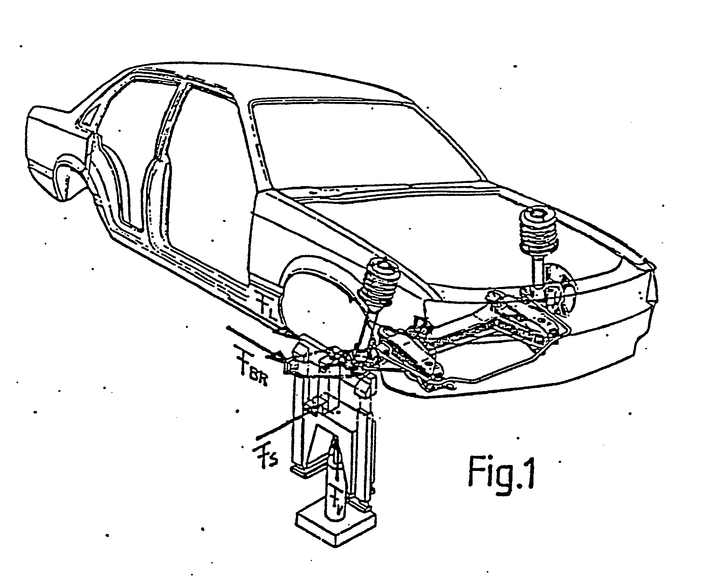

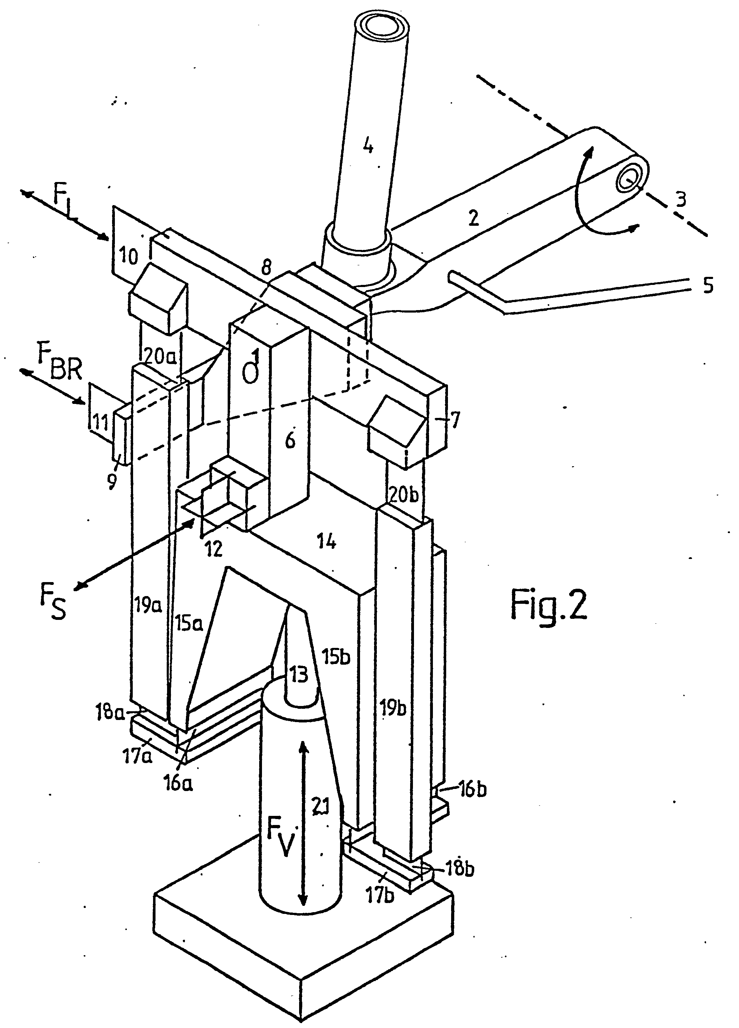

Die Erfindung wird in Form eines Ausführungsbeispiels anhand der schematischen, nicht maßstäblichen Figuren 1 und 2 erläutert; von diesen zeigt

Fig. 1 eine erfindungsgemäße Anordnung zur Schwingfestigkeitsprüfung von Radachsen bzw. -aufhängungen mit servohydraulischer Krafterzeugung zusammen mit dem zu belastenden Fahrzeug;

Fig. 2 Einzelheiten der Prüfanordnung gemäß der Figur 1.

Das Ausführungsbeispiel geht davon aus, daß der Einfluß von vier gleichzeitig wirksamen, unterschiedlich gerichteten Kräften auf die Radachse- bzw. -aufhängung untersucht werden soll. Diese Kräfte sind: die durch den Radaufstandspunkt gehende, senkrecht gerichtete Vertikalkraft $F_V$, die zu dieser senkrechte, am Reifen angreifende Seitenkraft $F_S$, die zu beiden senkrechte Bremskraft $F_{BR}$ und die zu dieser parallele Längskraft $F_L$ in Höhe der Radachse. Diese Kräfte werden in bekannter Weise durch servohydraulische Prüfzylinder erzeugt, von denen hier nur der Prüfzylinder für die Vertikalkraft $F_V$ gezeigt ist.

Gemäß der Fig. 2 sitzt beispielhaft die zu belastende Radachse 1 an einem Querlenker 2, der um die Achse 3 in Pfeilrichtung schwingen kann. Der Querlenker ist an einem Stoßdämpfer 4 aufgehängt und über die Querstrebe 5 mit dem entsprechenden Querlenker auf der anderen Fahrzeugseite gekoppelt. Auf der Radachse 1 sind ein Hebel 6, ein Joch 7 und ein Hebel 8 mit Lappen 9 befestigt. Die Länge des Hebels 6 entspricht dem halben Durchmesser, die Länge des Joches 7 dem Durchmesser des sonst auf der Achse 1 gelagerten Fahrzeugrades.

Auf den Hebel 6 wirkt parallel zur Radachse 1 die Seitenkraft $F_S$ auf das Joch 7 in dessen Längsrichtung die Längskraft $F_L$ ein. Der Hebel 8 nimmt über seinen Lappen 9 die Bremskraft $F_{BR}$ auf. Dem Joch 7 und dem Hebel 8 werden die Prüfkräfte über fest damit verbundene Blattfedern 10 bzw. 11 zugeführt. Die freien Enden der Federn 10 und 11 sind in nicht dargestellter Weise bspw. mittels Klemmen und Verschraubungen mit den entsprechenden, horizontal gelagerten Prüfzylindern verbunden. Die Seitenkraft $F_S$ wird von dem entsprechenden, ebenfalls horizontal gelagerten Prüfzylinder mittels einer Kopplung 12 übertragen, die, wie in der Fig. 2 lediglich symbolisch angedeutet ist, aus zwei Blattfedern mit zueinander senkrechten Biegerichtungen, gebildet ist. Bei der Realisierung dieser Kopplung sind die beiden Blattfedern selbstverständlich hintereinander zu schalten.

Die vom Prüfzylinder 21 erzeugte Vertikalkraft $F_V$ wird mittels der mit der Kolbenstange 13 verschraubten Brücke 14 auf deren beide Pfeiler 15a und 15b aufgeteilt. Diese Pfeiler sind über die Blattfedern 16a bzw. 16b, die Umlenkplatten 17a bzw. 17b und die Blattfedern 18a bzw. 18b deren Biegerichtung auf derjenigen der Federn I6a/b senkrecht steht, mit den Stangen 19a bzw. 19b gekoppelt. Von den Stangen 19a/b werden die beiden Komponenten der Vertikalkraft $F_V$ auf das mit ihnen über die geraden Blattfedern 20a bzw. 20b gekoppelte Joch 7 übertragen, durch welches die beiden Kraftkomponenten zu der an der Radachse 1 ansetzenden Vertikalkraft $F_V$ vereint werden.

Die Verwendung von Biegefedern, die in Richtung der zu übertragenden Kräfte zug- und druckfeste Verbindungen bilden, ergibt, wie die Fig. 2 zeigt, bewegliche Kopplungen, die die gegenseitige Beeinflussung der gleichzeitig eingeleiteten Prüfkräfte und insbesondere die durch das Schwingen des Querlenkers 2 um dessen Achse 3 bedingten Belastungen federnd abfangen lassen. Die Umlenkung der Vertikalkraft $F_V$ mittels der Brücke 14 und der Stangen 19a/b ermöglicht darüber hinaus nicht nur eine Bauhöhe der Prüfanordnung, die den Werten einer Krafteinleitung über den Reifen entsprechende Simulationen der Betriebsbeanspruchungen gestattet, sondern ergibt auch einen großen Biegeradius des Joches 7 gegenüber der Kolbenstange 13 für die Einleitung der Vertikalkraft $F_V$ und dementsprechend kleine Biegewinkel zwischen Joch 7 und den Stangen 19a/b die eine hohe Lebensdauer der eingesetzten Biegefedern gewährleisten. Darüber hinaus wird durch die gewählte vertikale Anordnung des Zylinders 21 die Masse des Gelenkes, gebildet aus den Teilen 14, 15a/b, 16a/b, 17a/b, 18a/b, 19a/b und 20a/b zwischen der Kolbenstange 13 und dem Joch 7 im Vergleich zu bestehenden Konstruktionen mit horizontaler Prüfzylinderanordnung und Kraftumlenkung entscheidend (mehr als 50%) reduziert. Eine weitere Massereduktion ist durch den Einsatz geeigneter Materialien technologisch einfach durchführbar.

**Patentansprüche:**

1. Anordnung zur Simulation der Betriebsbeanspruchungen von Fahrzeugen bzw. Fahrzeugbaugruppen mittels gleichzeitig wirksamer, über beweglich gekoppelte Glieder eingeleiteter und übertragener, unterschiedlich gerichteter Prüfkräfte $F_V$, $F_S$, $F_{BR}$, $F_L$, insbesondere zur Schwingfestigkeitsprüfung von Radachsen (1) und -aufhängungen, mit servohydraulischer Krafterzeugung,
   dadurch gekennzeichnet,
   daß die Glieder (6, 7, 14, 19a/b) durch Biegefedern (10, 11, 12, 16a/b, 18a/b, 20a/b) beweglich miteinander gekoppelt sind über die die Prüfkräfte ($F_V$, $F_S$, $F_{BR}$, $F_L$) eingeleitet und übertragen werden und die so orientiert sind, daß sie in der Richtung der zu übertragenden Kräfte zug- und druckfeste Kopplungen bilden.

   2. Anordnung nach Anspruch 1,
   gekennzeichnet
   durch Biegestäbe als Biegefedern.

   3. Anordnung nach Anspruch 1,
   gekennzeichnet
   durch Blattfedern als Biegefedern.

   4. Anordnung nach Anspruch 1 und 3,
   gekennzeichnet
   durch Kopplungen (16a/b, 17a/b, 18a/b) aus mindestens zwei hintereinandergeschalteten Blattfedern mit zueinander senkrechten Biegerichtungen.

   5. Anordnung nach Anspruch 3 oder 4,
   gekennzeichnet

durch Kopplungen (16a/b, 17a/b, 18a/b) aus mindestens zwei hintereinandergeschalteten Blattfedern, die eine Änderung der Wirkungsrichtung der zu übertragenden Prüfkraft, insbesondere eine Richtungsänderung um 180°, bewirken.

6. Anordnung nach jedem der Ansprüche 1, 4 und 5, zur Übertragung von mittels servohydraulischen Prüfzylindern simulierten Prüfkräften bei der Schwingfestigkeitsprüfung von Radachsen (1) und -aufhängungen durch Simulation von Längs-($F_L$), Seiten-($F_S$) und Vertikalkraft ($F_V$),

gekennzeichnet

durch eine Brücke (14) mit zwei zur Richtung der Vertikalkraft ($F_V$) parallelen, von der Radachse (1) wegweisenden pfeilern (15a/b), mittels der die von einem der Prüfzylinder (21) simulierte Vertikalkraft ($F_V$) in zwei parallele Prüfkräfte aufgeteilt wird, durch zwei zur Richtung der Vertikalkraft ($F_V$) parallele, zur Radachse (1) weisende Stangen (19a/b), auf die die Prüfkräfte vom Fuße der Brückenpfeiler (15a/b) durch Kopplungen (16a/b, 17a/b, 18a/b) aus Blattfedern (16a/b, 18a/b) mit zueinander senkrechten Biegerichtungen, vorzugsweise Biegerichtungen in Richtung der Längskraft ($F_L$) einerseits und der Seitenkraft ($F_S$) andererseits, übertragen werden, und durch ein mit der Radachse (1) verbundenes, das Fahrzeugrad simulierendes, senkrecht zu den beiden Stangen (19a/b) orientiertes und mit diesen durch Blattfedern (20a/b) gekoppeltes Joch (7), durch welches die von den beiden Stangen (19a/b) übertragenen Prüfkräfte zur auf die Radachse (1) einwirkenden Vertikalkraft ($F_V$) vereint werden.

## Claims

1. An arrangement for simulating the in-use stresses on motor vehicles or motor vehicle subassemblies by means of simultaneously active, differently directed test forces ($F_V$, $F_S$, $F_{BR}$, $F_L$) initiated and transmitted through movably coupled members, more particularly for the vibration resistance testing of axles (1) and suspensions, using servohydraulic force generation, characterized in that the members (6, 7, 14, 19a/b) are movably coupled together by flexural springs (10, 11, 12, 16a/b, 18a/b, 20a/b) through which the test forces ($F_V$, $F_S$, $F_{BR}$, $F_L$) are initiated and transmitted and which are oriented in such a way that they form couplings resistant to tension and compression in the direction of the forces to be transmitted.

2. An arrangement as claimed in Claim 1, characterized by flexural bars as flexural springs.

3. An arrangement as claimed in Claim 1, characterized by leaf springs as flexural springs.

4. An arrangement as claimed in Claims 1 and 3, characterized by couplings (16 a/b, 17a/b, 18a/b) of at least two leaf springs arranged one behind the other with flexing directions perpendicular to one another.

5. An arrangement as claimed in Claim 3 or 4, characterized by couplings (16a/b, 17a/b, 18a/b) of at least two leaf springs arranged one behind the other which change the direction in which the test force to be transmitted acts, more particularly through 180°.

6. An arrangement as claimed in any of Claims 1, 4 and 5 for transmitting test forces simulated by means of servohydraulic test cylinders (21) in the vibration resistance testing of axles (1) and suspensions by simulation of longitudinal, lateral and vertical forces ($F_L$, $F_S$, $F_V$), characterized by a bridge (14) with two pillars (15a/b) parallel to the direction of the vertical force ($F_V$) and facing away from the axle (1), by means of which the vertical force ($F_V$) simulated by one of the test cylinders (21) is divided into two parallel test forces, by two rods (19a/b) parallel to the direction of the vertical force ($F_V$) and facing towards the axle (1) to which the test forces are transmitted from the foot of the pillars (15a/b) by couplings (16a/b, 17a/b, 18a/b) of leaf springs (16a/b, 18a/b) with flexing directions perpendicular to one another, preferably in the direction of the longitudinal force ($F_L$) on the one hand and the lateral force ($F_S$) on the other hand, and by a yoke (7) which is connected to the axle (1) and simulates the wheel of the vehicle, being oriented perpendicularly of and coupled to the two rods (19a/b) by leaf springs (20a/b), and through which the test forces transmitted by the two rods (19a/b) are combined to form the vertical force ($F_V$) acting on the axle (1).

## Revendications

1. Dispositif de simulation des contraintes de service de véhicules ou sous-ensembles de véhicules, au moyen de forces d'essai ($F_V$, $F_S$, $F_{BR}$, $F_L$) de directions différentes, agissant simultanément, appliquées et transmises par l'intermédiaire d'organes accouplés de façon à être mobiles, destiné en particulier aux essais de résistance aux efforts alternés (ou résistance d'endurance) d'essieux (1) et de suspensions de roues, à génération des forces par un servomécanisme hydraulique, caractérisé en ce que les organes (6, 7, 14, 19a/b) sont accouplés mutuellement de façon à être mobiles au moyen de ressorts flexibles (10, 11, 12, 16a/b, 18a/b, 20a/b), par l'intermédiaire desquels les forces d'essai ($F_V$, $F_S$, $F_{BR}$, $F_L$) sont appliquées et transmises et qui sont orientés de façon à constituer des accouplements résistants à la traction et à la pression dans la direction des forces à transmettre.

2. Dispositif selon la revendication 1, caractérisé en ce que les ressorts flexibles sont des barreaux flexibles.

3. Dispositif selon la revendication 1, caractérisé en ce que les ressorts flexibles sont des ressorts à lames.

4. Dispositif selon les revendications 1 et 3, caractérisé en ce qu'il comporte des accouplements (16a/b, 17a/b, 18a/b) comprenant au moins deux ressorts à lames montés en série, présentant des directions de flexion mutuellement perpendiculaires.

5. Dispositif selon la revendication 3 ou 4, caractérisé en ce qu'il comporte des accouplements (16a/b, 17a/b, 18a/b) comprenant au moins deux ressorts à lames montés en série, qui produisent une modification de la direction d'action de la force d'essai à transmettre, notamment un changement de direction de 180°.

6. Dispositif selon chacune des revendications 1, 4 et 5, destiné à transmettre des forces d'essai simulées au moyen de servocylindres hydrauliques d'essai (21) dans le cadre des essais de résistance aux efforts alternes (de resistance d'endurance) d'essieux (1) et de suspensions de roues par simulation d'une force longitudinale ($F_L$), d,une force latérale ($F_S$) et d'une force verticale ($F_V$), caractérisé en ce qu'il comporte un pont (14) comportant deux piliers (15a/b) parallèles, dirigés à l'opposé de l'essieu (1), au moyen duquel la force verticale ($F_V$) simulée par l'un des cylindres d'essai (21) est décomposée en deux forces d'essai parallèles, deux barres (19a/b) parallèles à la direction de la force verticale ($F_V$), dirigées vers l'essieu (1), auxquelles les forces d'essai sont transmises à partir du pied des piliers (l5a/b) du pont par des accouplements (16a/b, 17a/b, 18a/b) constitués par des ressorts à lames (16a/b, 18a/b) de directions de flexion mutuellement perpendiculaires, de préférence de directions de flexion dirigées dans la direction de la force longitudinale ($F_L$) d'une part et de la force latérale ($F_S$) d'autre part, et une arche (7) reliée à l'essieu (1), simulant la roue du véhicule, orientée perpendiculairement aux deux barres (19a/b) et accouplée à celles-ci par des ressorts à lames (20a/b), par laquelle les forces d'essai transmises par les deux barres (19a/b) sont réunies en une force verticale ($F_V$) agissant sur l'essieu (1).

Fig.1

0 094 570

Fig.2